# EUROPEAN PATENT APPLICATION

(11) **EP 3 176 626 A1**
(43) Date of publication of application: **07.06.2017**
(21) Application number: 15827765.7
(22) Date of filing: 17.07.2015
(51) Int. Cl.: G02B 27/02, H04N 5/64

(54) **IMAGE DISPLAY DEVICE AND DEFLECTION UNIT**

(30) Priority: 30.07.2014 JP 2014154954
(71) Applicant: Brother Kogyo Kabushiki Kaisha, Nagoya-shi, Aichi 467-8561 (JP)
(72) Inventor: KUSUDA Miyuki, Nagoya-shi Aichi 467-8561 (JP)
(74) Representative: Smith, Samuel Leonard
(86) International application number: PCT/JP2015/070518
(87) International publication number: WO 2016/017455

(57) **Abstract**

Provided are an image display device, a head-mounted display and a deflection unit capable of preventing an operation of a user from being obstructed when a deflection member is detached. The head-mounted display includes an image light unit, a holder 5 that holds a deflection member that deflects image light, and a casing 12. The casing 12 includes three extending parts (a first extending part, a second extending part 22A, and a third extending part 23A) which extend between a left side of the image light unit, and left ends 21C, 22C, and 23C of the casing 12. A first rear surface 21B comes into contact with the holder 5 in a mounted state. A second regulation member 211 is provided on the first rear surface 21B. A front-side first regulation member and a rear-side first regulation member 221B are provided on a second rear surface. A front-side first regulation member 231A and a rear-side first regulation member are provided on a third rear surface 23B. A half mirror 56 deflects image light to a rear side in a state in which the holder 5 is mounted to the casing 12.

## Description

### [Technical Field]

The present disclosure relates to an image display device that can be mounted on a head of a user, and a deflection unit.

### [Background Art]

In the related art, a head-mounted display is known as an image display device including a deflection member that deflects image light toward eyes of a user. A head-mounted display described in Patent Document 1 includes a body part and an emission port part. The body part includes an LCD and an eyepiece optical system on an inner side. The body part is fixed to an eyeglass-type frame. The emission port part supports a half mirror that is a deflection member in a rotatable manner. The half mirror deflects image light of an image that is displayed on the LCD toward eyes of a user. The emission port part can be attached and detached to and from the body part. When a convex portion of the emission port part is fit into a concave portion of the body part, the emission port part is held to the body part. The emission port part is detached from the body part when an external force is applied thereto.

### [Prior Art Document]

### [Patent Document]

[Patent Document 1] Japanese Patent Laid-Open Publication No. 2013-44830

### [Summary of Invention]

### [Problems to be Solved by Invention]

In the head-mounted display, when the emission port part is repetitively attached and detached to and from the body part, the convex portion and the concave portion may be abraded. In this case, the emission port part is likely to be detached from the body part. Accordingly, there is a problem that the emission port part is detached from the body part and intrudes into an operation region during an operation of a user who wears the head-mounted display, and the operation may be obstructed.

An object of the present disclosure is to provide an image display device and a deflection unit capable of preventing the deflection member from being detached and intruding into an operation region.

### [Means for Solving Problems]

An image display device according to a first aspect of the present disclosure is an image display device, comprising: an image light unit that generates image light and is capable of emitting the image light to one side of a first direction; a deflection member that deflects the image light that is emitted from the image light unit; a holder that holds the deflection member; and a casing that covers at least a part of the image light unit and detachably supports the holder, wherein the casing includes three extending parts which extend between an end of the image light unit on the one side of the first direction, and an end of the casing on the one side of the first direction, the three extending parts including: a first extending part that is formed on one side of a second direction perpendicular to the first direction, and includes a first surface that faces the other side of the second direction; a second extending part that is formed on one side of a third direction perpendicular to both of the first direction and the second direction, and includes a second surface that faces the other side of the third direction; and a third extending part that is formed on the other side of the third direction, faces the one side of the third direction, and includes a third surface that faces the second surface, a portion of the first extending part on the one side of the third direction is connected to a portion of the second extending part on the one side of the second direction, and a portion of the first extending part on the other side of the third direction is connected to a portion of the third extending part on the one side of the second direction, at least the first surface comes into contact with the holder in a state of being mounted to the casing, a regulation member, which regulates movement of the holder in the first direction, is provided on at least one of the first surface, the second surface, and the third surface, and the deflection member deflects the image light to the other side of the second direction in a state in which the holder is mounted to the casing.

A deflection unit according to a second aspect of the present disclosure is a deflection unit, comprising: a deflection member that deflects image light in a case where the image light generated by an image light unit is emitted to one side of a first direction; and a holder that is detachably supported to a casing covering at least a part of the image light unit, and holds the deflection member, wherein the casing includes three extending parts which extend between an end of the image light unit on the one side of the first direction, and an end of the casing on the one side of the first direction, the three extending parts including a first extending part that is formed at an end on one side of a second direction perpendicular to the first direction, and includes a first surface that faces the other side of the second direction, a second extending part that is formed at an end on one side of a third direction perpendicular to both of the first direction and the second direction, and includes a second surface that faces the other side of the third direction, and a third extending part that is formed at an end on the other side of the third direction, and includes a third surface that faces the one side of the third direction, and at least the first surface including an engagement element that comes into contact with the holder in a state of being mounted to the casing and is capable of engaging with the holder, the deflection member deflects the image light to the other side of the second direction in a state in which the holder is mounted to the casing, the holder includes a base member including a first end portion which comes into contact with the first surface, a second end portion, a third end portion, and a fourth end portion, and the base member includes a protruding portion protruding from any one of the first end portion, the second end portion, the third end portion, and the fourth end portion, and engaging with the engagement element in a state in which the holder is mounted to the casing.

An image display device according to a third aspect of the present disclosure is an image display device, comprising: an image light unit that generates image light, and is capable of emitting the image light to one side of a first direction; a deflection member that deflects the image light, which is emitted from the image light unit, to the other side of a second direction that is perpendicular to the first direction; a holder that holds the deflection member; a casing that covers at least a part of the image light unit, and is detachably supports the holder; and a regulation member that is provided in the casing, engages with the holder, regulates movement of the holder in the first direction, and permits movement along the second direction, and in a state in which the holder is mounted to the casing, one end of the holder on one side of the second direction comes into contact with an inner surface of the casing.

### [Brief Description of Drawings]

FIG. 1 is a perspective view of an HMD 1.
FIG. 2 is a perspective view of a body member 11.
FIG. 3 is a left side view of the body member 11.
FIG. 4 is a perspective view of a casing 12.
FIG. 5 is a view when a front-side casing 13 is seen from a backward side.
FIG. 6 is an exploded perspective view illustrating an inner side of the body member 11.
FIG. 7 is a perspective view of a lens unit 6.
FIG. 8 is a rear view of an adjustment mechanism 4.
FIG. 9 is a perspective view of a holder 5.
FIG. 10 is a perspective view of the holder 5.
FIG. 11 is a view illustrating a state in which the holder 5 and a half mirror 56 are removed from the casing 12.
FIG. 12 is a view illustrating a state in which the holder 5 and the half mirror 56 are mounted to the casing 12.
FIG. 13 is a perspective view of the lens unit 6, an image unit 7, an operation member 3, and the adjustment mechanism 4.
FIG. 14 is a perspective view of the lens unit 6, the image unit 7, the operation member 3, and the adjustment mechanism 4.

### [Mode for Carrying out Invention]

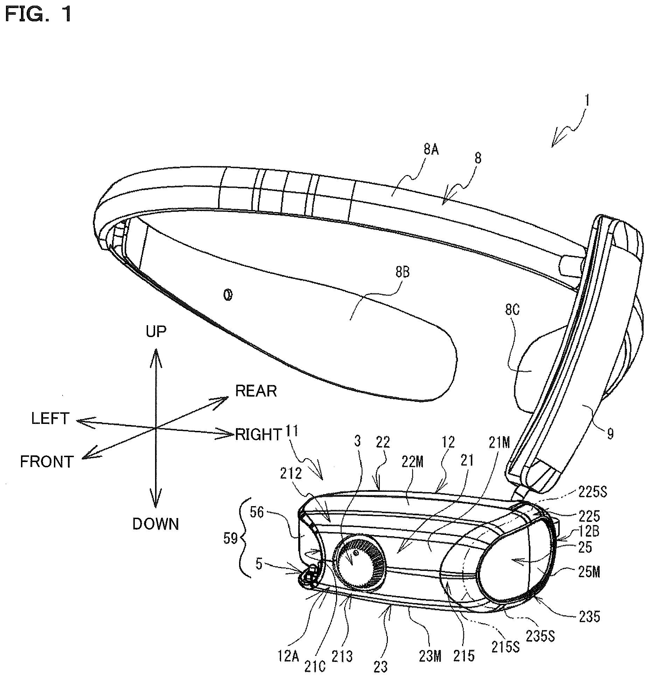

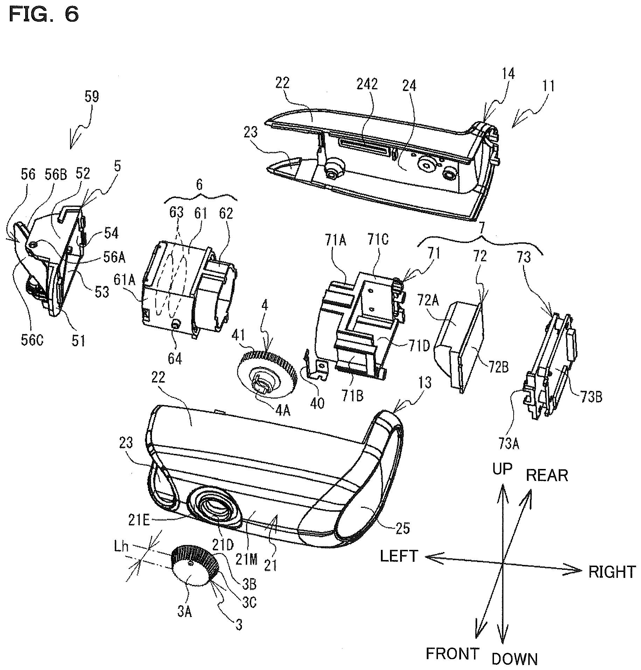

Hereinafter, an embodiment of the present disclosure will be described with reference to the accompanying drawings. As illustrated in FIG. 1, a head-mounted display (hereinafter, referred to as "HMD") 1 is an optical transmission type see-through HMD. Light of a landscape in front of eyes of a user is transmitted through a half mirror 56 and is directly guided to the eye of the user. A projection type of the HMD 1 is a virtual image projection type. The half mirror 56 reflects light of an image, which is displayed on a liquid crystal panel 72B (to be described, refer to FIG. 6), toward one eye of the user. The HMD 1 allows the user to recognize an image in a state in which the image overlaps the landscape in front of the eye. The HMD 1 includes a body member 11, a mounting member 8, and a connecting member 9. Hereinafter, an upper side, a lower side, a left side, a right side, a front side, and a rear side of the HMD 1 will be defined for easy understanding of the drawings. For example, the upper side, the lower side, the left side, the right side, the front side, and the rear side of the HMD 1 respectively correspond to an upper side, a lower side, a left side, a right side, a diagonally lower-left side, and a diagonally upper-right side in FIG. 1. The upper side, the lower side, the left side, the right side, the front side, and the rear side of the HMD 1 correspond to directions in a case where the mounting member 8 is mounted on the user.

### <Mounting Member 8, Connection Member 9, and Body Member 11>

The mounting member 8 is constituted by a flexible material such as a resin and a metal (for example, stainless steel). The mounting member 8 includes a first portion 8A, and second portions 8B and 8C. The first portion 8A, and the second portions 8B and 8C are elongated plate-shaped members which are curved, respectively. The first portion 8A extends in a right and left direction, and is curved in a forwardly convex shape. The second portion 8B extends from an end on one side (for example, a left side) of the first portion 8A. The second portion 8C extends from an end on the other side (for example, a right side) of the first portion 8A. In the second portions 8B and 8C, ends on a side (for example, a rear side) opposite to a side, at which ends are connected to the first portion 8A, extend in a direction in which the ends approach each other. The mounting member 8 is mounted on the head of the user in a state in which the first portion 8A, and the second portions 8B and 8C are brought into contact with the a front head portion, a right head portion, and a left head portion of the user, respectively. In this state, the first portion 8A extends in the right and left direction along the forehead of the user.

The connecting member 9 has a rod shape. The connecting member 9 is constituted by a resin, a metal, and the like. One end (for example, an upper side) of the connecting member 9 is connected to the vicinity of a portion, which is connected to the second portion 8C, of the first portion 8A of the mounting member 8. The connecting member 9 and the mounting member 8 are connected to each other by a ball joint. The body member 11 to be described later is connected to the other end (for example, a lower side) of the connecting member 9. The connecting member 9 and the body member 11 are connected to each other by a ball joint. The connecting member 9 holds the body member 11 at a position spaced away from the mounting member 8. The connecting member 9 can dispose the half mirror 56 of the body member 11 in front of a left eye of the user in a state in which the mounting member 8 is mounted on the head of the user.

As illustrated in FIG. 1, FIG. 2, and FIG. 3, the body member 11 includes a casing 12, an operation member 3, an adjustment mechanism 4 (refer to FIG. 6), a deflection unit 59, a lens unit 6 (refer to FIG. 6), an image unit 7 (refer to FIG. 6). The deflection unit 59 includes a holder 5 and the half mirror 56.

### <Casing 12>

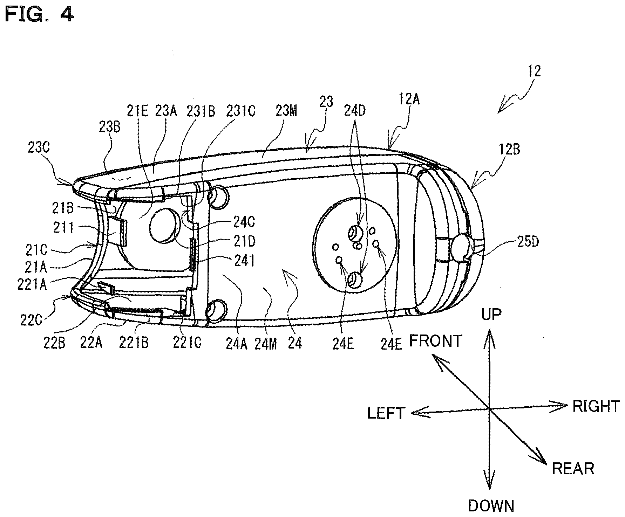

As illustrated in FIG. 1, FIG. 2, and FIG. 4, the casing 12 includes a body part 12A and a protruding part 12B. The body part 12A has an approximately rectangular parallelepiped shape in which corners are curved. The protruding part 12B protrudes from a right rear side of the body part 12A to a backward side. The casing 12 has a hollow box shape. A front side, an upper side, a lower side, a rear side, and a right side of the body part 12A are respectively referred to as a first casing 21, a second casing 22, a third casing 23 (refer to FIG. 1), a fourth casing 24 (refer to FIG. 4), and a fifth casing 25 (refer to FIG. 1). A front-side surface of the first casing 21, an upper-side surface of the second casing 22, a lower-side surface of the third casing 23, a rear-side surface of the fourth casing 24, and a right-side surface of the fifth casing 25 are respectively referred to as a first front surface 21M, a second front surface 22M, a third front surface 23M, a fourth front surface 24M (refer to FIG. 4), and a fifth front surface 25M (refer to FIG. 1). Furthermore, a left side of the casing 12 is opened, and a left side of the lens unit 6 (to be described later) on an inner side of the casing 12 is exposed. The left side of the lens unit 6 is not covered with the casing 12.

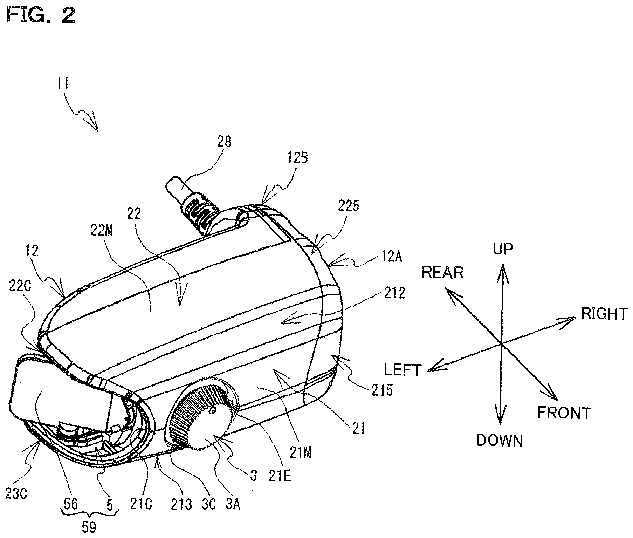

As illustrated in FIG. 1 and FIG. 2, the vicinity (hereinafter, referred to as "curved portion 212") of a portion at which the first front surface 21M and the second front surface 22M are connected to each other, and the vicinity (hereinafter, referred to as "curved portion 213") of a portion at which the first front surface 21M and the third front surface 23M are connected to each other are curved, respectively. As illustrated in FIG. 1, the vicinity (hereinafter, referred to as "curved portion 215") of a portion at which the first front surface 21M and the fifth front surface 25M are connected to each other, the vicinity (hereinafter, referred to as "curved portion 225") of a portion at which the second front surface 22M and the fifth front surface 25M are connected to each other, and the vicinity (hereinafter, referred to as "curved portion 235") of a portion at which the third front surface 23M and the fifth front surface 25M are connected to each other are curved, respectively.

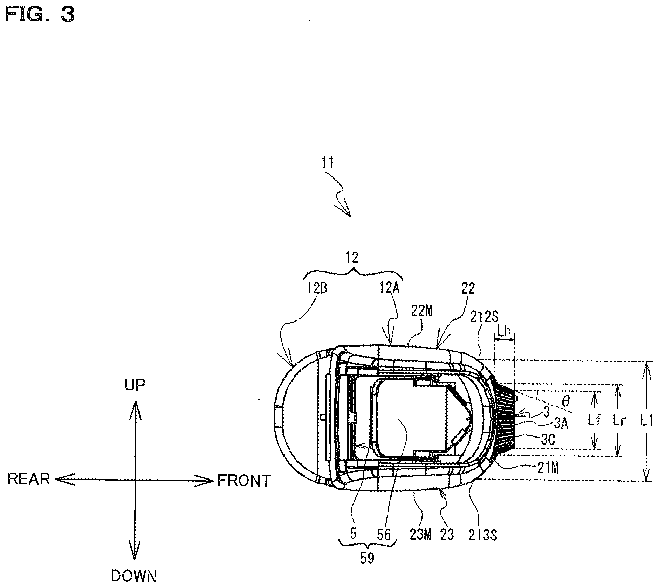

Furthermore, in the following description, in the curved portion 212, a position at which a tangential line is inclined with respect to a horizontal direction by 45° is defined as a connection position 212S (refer to FIG. 3). The connection position 212S is a position at which the first front surface 21M and the second front surface 22M are connected to each other. The connection position 212S is also a position at which the first casing 21 and the second casing 22 are connected to each other. In the curved portion 213, a position at which a tangential line is inclined with respect to the horizontal direction by 45° is defined as a connection position 213S (refer to FIG. 3). The connection position 213S is a position at which the first front surface 21M and the third front surface 23M are connected to each other. The connection position 213S is also a position at which the first casing 21 and the third casing 23 are connected to each other. In the curved portion 215, a position at which a tangential line is inclined with respect to the horizontal direction by 45° is defined as a connection position 215S. The connection position 215S is a position at which the first front surface 21M and the fifth front surface 25M are connected to each other. The connection position 215S is also a position at which the first casing 21 and the fifth casing 25 are connected to each other. In the curved portion 225, a position at which a tangential line is inclined with respect to the horizontal direction by 45° is defined as a connection position 225S. The connection position 225S is a position at which the second front surface 22M and the fifth front surface 25M are connected to each other. The connection position 225S is also a position at which the second casing 22 and the fifth casing 25 are connected to each other. In the curved portion 235, a position at which a tangential line is inclined with respect to the horizontal direction by 45° is defined as a connection position 235S. The connection position 235S is a position at which the third front surface 23M and the fifth front surface 25M are connected to each other. The connection position 235S is also a position at which the third casing 23 and the fifth casing 25 are connected to each other.

The second front surface 22M is inclined in a diagonally downward direction as it goes from the rear side to the front side. The third front surface 23M is inclined in a diagonally upward direction as it goes from the rear side to the front side. Accordingly, a distance between the second front surface 22M and the third front surface 23M in an up and down direction gradually decreases as it goes from the rear side to the front side. Accordingly, a length of the fifth front surface 25M in the up and down direction, in other words, a length between the connection position 225S and the connection position 235S in the up and down direction also gradually decreases as it goes from the rear side to the front side.

As illustrated in FIG. 2, a left end 21C of the first casing 21 is recessed toward a right direction as it goes from both ends in the up and down direction to a center in the up and down direction. The left end 21C forms an approximately circular arc. A position at the most right side of the left end 21C is located on a right side in comparison to positions on the most left side of a left end 22c of the second casing 22 and a left end 23C of the third casing 23. As illustrated in FIG. 4, a position on the most left side of a left end 24C of the fourth casing 24 is located on a right side in comparison to a position on the most left side of each of the left ends 21C, 22C, and 23C.

Hereinafter, in the first casing 21, the second casing 22, the third casing 23, and the fourth casing 24, portions on a left side in comparison to the lens unit 6 to be described later (refer to FIG. 6) are respectively refer to as a first extending part 21A, a second extending part 22A, a third extending part 23A, and a fourth extending part 24A. The first extending part 21A corresponds to a portion that extends between a left end of the lens unit 6 and the left end 21C. The second extending part 22A corresponds to a portion that extends between the left end of the lens unit 6 and the left end 22C. The third extending part 23A corresponds to a portion that extends between the left end of the lens unit 6 and the left end 23C. The fourth extending part 24A corresponds to a portion that extends between the left end of the lens unit 6 and the left end 24C. An upper side of the first extending part 21A is connected to a front side of the second extending part 22A. A lower side of the first extending part 21A is connected to a front side of the third extending part 23A. A rear-side surface of the first extending part 21A, a lower-side surface of the second extending part 22A, and an upper-side surface of the third extending part 23A are respectively referred to as a first rear surface 21B, a second rear surface 22B, and a third rear surface 23B. The second rear surface 22B and the third rear surface 23B face each other.

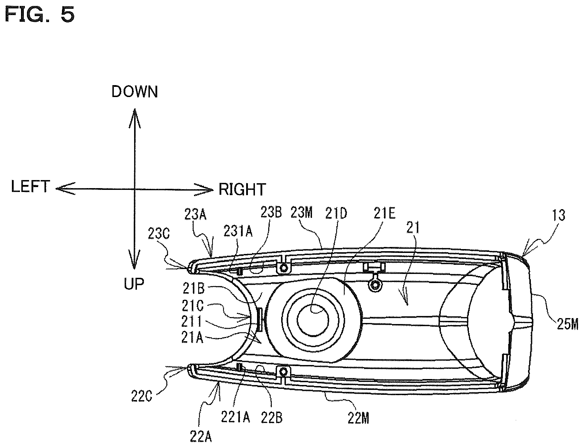

As illustrated in FIG. 4 and FIG. 5, a front-side first regulation member 221A is provided on a front side of the second rear surface 22B. The front-side first regulation member 221A is a plate-shaped member that downwardly extends from an inner side of the curved portion 212 (refer to FIG. 1) in the second rear surface 22B. As illustrated in FIG. 5, a front-side first regulation member 231A is provided on a front side of the third rear surface 23B. The front-side first regulation member 231A is a plate-shaped member that upwardly extends from an inner side of the curved portion 213 (refer to FIG. 1) in the third rear surface 23B. Both surfaces of each of the front-side first regulation members 221A and 231A face the right and left direction. Positions of the front-side first regulation members 221A and 231A in the right and left direction are the same as each other.

As illustrated in FIG. 4, a rear-side first regulation member 221B is provided on a rear side of the second rear surface 22B. The rear-side first regulation member 221B is a plate-shaped member that downwardly extends along a rear end of the second extending part 22A. A rear-side first regulation member 231B is provided on a rear side of the third rear surface 23B. The rear-side first regulation member 231B is a plate-shaped member that upwardly extends along a rear end of the third extending part 23A. Both surfaces of each of the rear-side first regulation members 221B and 231B face a front and rear direction. Positions of the front-side first regulation members 221A and 231A in the right and left direction and positions of right ends of the rear-side first regulation members 221B and 231B in the right and left direction are approximately same as each other. A right end of the rear-side first regulation member 221B, an upper end of the left end 24C of the fourth casing 24, and the second rear surface 22B form a grove 221C that is upwardly recessed. A right end of the rear-side first regulation member 231B, a lower end of the left end 24C of the fourth casing 24, and the third rear surface 23B form a groove 231C that is downwardly recessed.

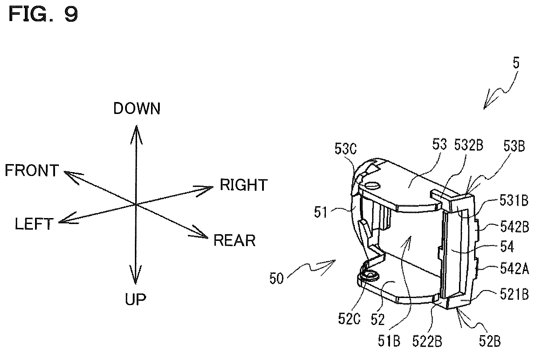

As illustrated in FIG. 4 and FIG. 5, a hole 21D, which passes through the first casing 21 in the front and rear direction, is formed in the first casing 21 on a left side in comparison to a center of the first casing 21 in the up and down direction, and a center of the casing 12 in the right and left direction. The adjustment mechanism 4 to be described later (refer to FIG. 6) is fitted into the hole 21D from a backward side. A concave portion 21E, which is recessed in a circular shape toward a backward side, is provided at the periphery of the hole 21D of the first casing 21. The operation member 3 to be described later (refer to FIG. 6) is fitted into the concave portion 21E from the front side. A second regulation member 211 is provided on the first rear surface 21B in the vicinity of a left side of the concave portion 21E and the left end 21C. The second regulation member 211 is a plate-shaped member that extends to the backward side from a position including a center of the first rear surface 21B in the up and down direction. Both surfaces of the second regulation member 211 face the right and left direction. As illustrated in FIG. 5, the second regulation member 211 is disposed on a right side in comparison to positions of the front-side first regulation members 221A and 231A in the right and left direction. As illustrated in FIG. 4, the second regulation member 211 is disposed on a right side in comparison to positions of right ends of the rear-side first regulation members 221B and 231B in the right and left direction. A length in the right and left direction between each of the right ends of the front-side first regulation members 221A and 231A, and the rear-side first regulation members 221B and 231B, and a left end of the second regulation member 211 is the same as a length (thickness) of a first end portion 51 (refer to FIG. 9) of the holder 5 to be described (refer to FIG. 9) in the right and left direction.

As illustrated in FIG. 4, a plurality of holes 24D and a plurality of holes 24E, which pass through the fourth casing 24 in the front and rear direction, are formed in the fourth casing 24 on a right side in comparison to the center of the casing 12 in the right and left direction. The plurality of holes 24D are a plurality of screw holes which are used to mount the image unit 7 to be described later to the casing 12. The plurality of holes 24E are a plurality of screw holes which are used to mount the connecting member 9 to the casing 12. A hole 25D, which passes through a rear end of the protruding part 12B in the front and rear direction, is provided in the rear end of the protruding part 12B. A communication line 28 (refer to FIG. 2) is connected to the hole 25D. The HMD 1 is connected to an external device (not illustrated) through the communication line 28. The external device outputs image data to the HMD 1.

A casing engagement part 241 is provided in the fourth extending part 24A of the fourth casing 24, more specifically, on the left end 24C of the fourth casing 24. The casing engagement part 241 is a plate-shaped member that extends from a position including a center of the left end 24C of the fourth casing 24 in the up and down direction to a left direction.

As illustrated in FIG. 6, the casing 12 is formed by combining a front-side casing 13 and a rear-side casing 14. The front-side casing 13 includes front portions of the first casing 21, the second casing 22, and the third casing 23, and the fifth casing 25. The rear-side casing 14 includes rear portions of the second casing 22 and the third casing 23, and the fourth casing 24. The lens unit 6, the image unit 7, and the adjustment mechanism 4 are disposed in the casing 12. The holder 5 is held to a left end of the casing 12. The holder 5, the lens unit 6, and the image unit 7 are sequentially arranged from the left side to the right side. The adjustment mechanism 4 is disposed on a front side of the lens unit 6. A groove 242, which is backwardly recessed, is provided in a surface on a front side of backward lateral surface (fourth casing 24) of the rear-side casing 14. The groove 242 extends in the right and left direction.

### <Image Unit 7>

The image unit 7 generates image light of an image in accordance with image data that is received from the external device through the communication line 28 (refer to FIG. 2), and emits the image light. As illustrated in FIG. 6, the image unit 7 includes a first holding member 71, a liquid crystal display device 72, and a second holding member 73.

The first holding member 71 includes a cylindrical member 71A, and lateral plate members 71B, 71C, and 71D. The cylindrical member 71A is a cylindrical member that extends in the right and left direction. The lateral plate members 71B, 71C, and 71D are plate-shaped members which extend from a front end, a rear end, and a lower side of a right end of the cylindrical member 71A to a right side. A lower end of the lateral plate member 71B is connected to a front end of the lateral plate member 71D, and a lower end of the lateral plate member 71C is connected to a rear end of the lateral plate member 71D. The first holding member 71 is held at a fixing position with respect to the casing 12 by screws which are inserted in the plurality of holes 24D (refer to FIG. 4).

The liquid crystal display device 72 includes a glass substrate 72A and the liquid crystal panel 72B. The glass substrate 72A and the liquid crystal panel 72B are disposed a portion that is surrounded by the lateral plate members 71B, 71C, and 71D in the first holding member 71. The liquid crystal panel 72B is a rectangular liquid crystal panel that is known. The liquid crystal panel 72B displays an image on a left lateral surface, thereby generating image light. The glass substrate 72A is provided on the left lateral surface of the liquid crystal panel 72B to protect a display surface of the liquid crystal panel 72B. For example, in a case where the liquid crystal panel 72B is a reflective liquid crystal, light from a light source (not illustrated) is incident to the liquid crystal panel 72B. The liquid crystal panel 72B reflects the incident light to generate image light. The image light, which is generated by the liquid crystal panel 72B, is transmitted from the glass substrate 72A on a left side.

The second holding member 73 includes a substrate holding part 73A and a control substrate 73B. The substrate holding part 73A is disposed on a right side of the liquid crystal panel 72B of the liquid crystal display device 72. The control substrate 73B is disposed on a right side of the substrate holding part 73A. The control substrate 73B is connected to the liquid crystal panel 72B through a flexible printed substrate (not illustrated). The communication line 28 (refer to FIG. 2) is connected to the control substrate 73B. The control substrate 73B receives image data, which is transmitted from the external device, through the communication line 28. The control substrate 73B outputs a control signal to the liquid crystal panel 72B through the flexible printed substrate to display image in accordance with the image data on the liquid crystal panel 72B.

Furthermore, in the present disclosure, a two-dimensional display device such as a digital mirror device (DMD) and an organic EL may be used instead of the liquid crystal panel 72B. In addition, a retinal scanning display, which projects two-dimensionally scanned light on a retina of a user, may be used.

### <Lens Unit 6>

The lens unit 6 is disposed on a left side of the image unit 7. The lens unit 6 guides image light, which is emitted from the image unit 7, to the half mirror 56 that is disposed on a left side of the lens unit 6. The lens unit 6 includes a holding member 61, a cylindrical member 62, and a plurality of lenses 63.

The holding member 61 is a member having an approximately square tube shape that extends in the right and left direction. The plurality of lenses 63 are fixed on an inner side of the holding member 61. An optical axis of each of the plurality of lenses 63 is disposed on an axial line that extends from a center of the holding member 61 in the right and left direction. The cylindrical member 62 is a cylindrical member that extends in the right and left direction. The cylindrical member 62 is provided on a right side of the holding member 61. The radius of the cylindrical member 62 is slightly smaller than a radius of the cylindrical member 71A of the image unit 7. At least a part of the cylindrical member 62 is fitted into an inner side of the cylindrical member 71A. Image light, which is generated by the image unit 7, is incident to an inner side of the cylindrical member 62 from the right side, passes through the inner sides of the holding member 61 and the cylindrical member 62, and is emitted from a left end of the holding member 61 toward the left side. The plurality of lenses 63 refracts image light that is incident from the right side, and emits the image light to the left side.

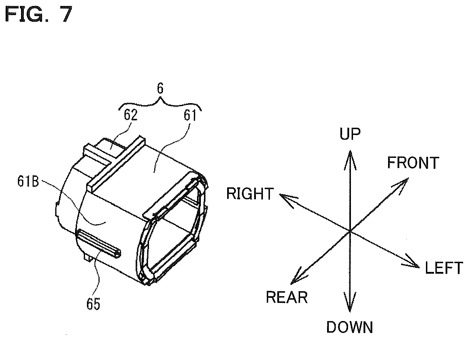

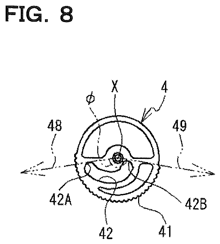

A convex portion 64, which protrudes to a forward side, is provided on a surface 61A on a front side of the holding member 61. The convex portion 64 has a columnar shape. The convex portion 64 is fitted into a cam groove 42 (refer to FIG. 8) of the adjustment mechanism 4 to be described later. As illustrated in FIG. 7, a convex portion 65, which protrudes toward a backward side, is provided on a rear-side surface 61B of the holding member. The convex portion 65 has a rod shape that is long in the right and left direction. The convex portion 65 is fitted into a groove 242 (refer to FIG. 6) of the fourth casing 24.

### <Operation Member 3>

As illustrated in FIG. 6, the operation member 3 is a member having a truncated cone shape. A central axis of the operation member 3 extends in the front and rear direction. The operation member 3 can rotate around the central axis as a supporting point. The operation member 3 includes a front end surface 3A, a rear end surface 3B, and a lateral surface 3C. The front end surface 3A is the front-side bottom of the operation member 3. The front end surface 3A corresponds to an upper base of the truncated cone shape. The rear end surface 3B is the rear-side bottom of the operation member 3. The rear end surface 3B corresponds to a lower base of the truncated cone shape. The front end surface 3A and the rear end surface 3B are respectively perpendicular to the front and rear direction. A fitting groove (not illustrated), into which a protruding part 4A (to be described later) of the adjustment mechanism 4 is fitted, is provided in the rear end surface 3B. The lateral surface 3C corresponds to a lateral surface of the truncated cone shape. A plurality of depressions and protrusions, which extend in the front and rear direction, are provided in the lateral surface 3C. In a case where a finger of a user comes into contact with the lateral surface 3C and applies a force thereto, the depressions and protrusions prevents the finger from slipping on the operation member 3.

The rear end surface 3B is fitted into a concave portion 21E that is provided in the first casing 21. Furthermore, in the first casing 21, the concave portion 21E is provided on a left side in comparison to the center of the casing 12 in the right and left direction, and thus the operation member 3 is disposed on a left side in comparison to the center of the casing 12 in the right and left direction. A distance between the front end surface 3A and the rear end surface 3B, that is, a length Lh of the operation member 3 in the front and rear direction is set to a predetermined length (for example, 3 mm) that is appropriate for a user to bring a finger into contact with the lateral surface 3C so as to rotate the operation member. Furthermore, a position of the rear end surface 3B in the front and rear direction is approximately the same as a position, at which the operation member 3 is provided, of the first front surface 21M of the first casing 21 in the front and rear direction. Accordingly, as illustrated in FIG. 3, the height (= length Lh) of the operation member 3 with respect to the first front surface 21M becomes 3 mm. Furthermore, in the present disclosure, the length Lh may be a value greater than 3 mm without limitation to 3 mm.

As illustrated in FIG. 3, a diameter Lf of the front end surface 3A is smaller than a diameter Lr of the rear end surface 3B (refer to FIG. 6). Accordingly, the length of the front end surface 3A in the up and down direction at a specific position (hereinafter, referred to as "specific right/left position") of the operation member 3 in the right and left direction is always shorter than the length of the rear end surface 3B in the up and down direction at the specific right/left position. In addition, the length of the front end surface 3A in the right and left direction at a specific position (hereinafter, referred to as "specific up/down position") of the operation member 3 in the up and down direction is also always shorter than the length of the rear end surface 3B in the right and left direction at the specific up/down position. In addition, in the operation member 3, an angle θ of the lateral surface 3C with respect to a direction (front and rear direction) in which the central axis extends is set to a predetermined angle (for example, 40°) so that an inner side of the middle finger and the lateral surface 3C become parallel to each other to a certain degree at which an operation becomes easy in a state in which the user holds the casing 12 with the thumb and the forefinger from upper and lower sides. Furthermore, in the present disclosure, the angle θ may be a value smaller than 40° without limitation to 40°.

### <Adjustment Mechanism 4>

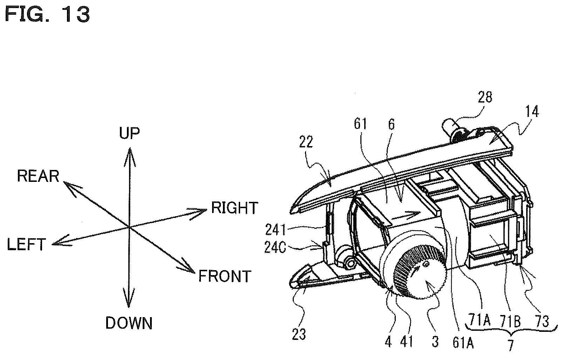

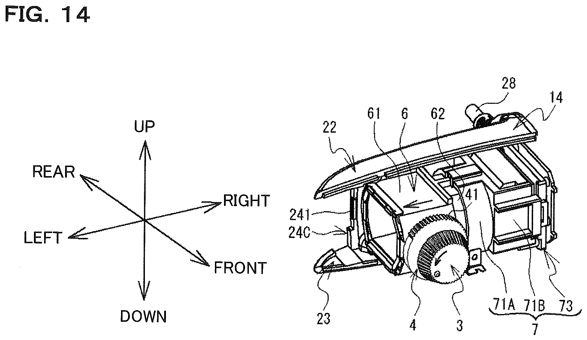

As illustrated in FIG. 6, the adjustment mechanism 4 is a circular plate-shaped member. Both surfaces of the adjustment mechanism 4 face the front and rear direction. A plurality of concave portions 41, which extend in the front and rear direction, are provided in a lateral surface of the adjustment mechanism 4. A leaf spring 40, which is provided on an inner side of the casing 12, engages with any one of the plurality of concave portions 41. The adjustment mechanism 4 includes a protruding part 4A that protrudes from the vicinity of a circular center to a forward side. The protruding part 4A enters the hole 21D of the first casing 21 from a rear side, and protrudes to a front side of the first front surface 21M of the first casing 21. In the protruding part 4A, a portion, which protrudes to the front side of the first front surface 21M, is fitted into a fitting groove (not illustrated) in the rear end surface 3B of the operation member 3 (refer to FIG. 13 and FIG. 14). According to this, the operation member 3 and the adjustment mechanism 4 are held to the first casing 21. The adjustment mechanism 4 can rotate around an axis, which extends in the front and rear direction from the circular center, as a supporting point integrally with the operation member 3. Furthermore, the adjustment mechanism 4 may be formed integrally with the operation member 3.

In a state in which the operation member 3 and the adjustment mechanism 4 are held to the first casing 21, as illustrated in FIG. 3, the diameter Lr of the rear end surface 3B (refer to FIG. 6) is shorter than a length of the first front surface 21M in the up and down direction, specifically, a length L1 between a connection position 212S and a connection position 213S in the up and down direction. An upper-side end of the rear end surface 3B is disposed on a lower side in comparison to an upper-side end of the first front surface 21M, that is, the connection position 212S, and a lower-side end of the rear end surface 3B is disposed on an upper side in comparison to a lower-side end of the first front surface 21M, that is, the connection position 213S.

As illustrated in FIG. 8, the cam groove 42 is provided in a rear lateral surface of the adjustment mechanism 4. The cam groove 42 is formed in such a manner that a part of the rear lateral surface of the adjustment mechanism 4 is recessed toward the front side. The cam groove 42 extends in a spiral shape from the circular center X of the adjustment mechanism 4 as a supporting point. The cam groove 42 is spaced from the circular center X in a state seen from a rear side as it circulates around in a clockwise direction. Hereinafter, the following explanation for a shape of the cam groove 42 is made on the assumption of the state seen from the rear state. The cam groove 42 includes a first end 42A and a second end 42B. The first end 42A is an end of the cam groove 42 in the clockwise direction, and the second end 42B is an end in a counterclockwise direction. In an angle made between a direction 48 that extends from the circular center X toward an outer side after passing through the first end 42A, and a direction 49 that that extends from the circular center X toward an outer side after passing through the second end 42B, an angle φ on a cam groove 42 side is 120°. Furthermore, in the present disclosure, the angle φ may be a value smaller than 120° without limitation to 120°. The convex portion 64 of the lens unit 6 is fitted into the cam groove 42 from a backward side in a state in which the operation member 3 and the adjustment mechanism 4 are held to the first casing 21.

### <Deflection Unit 59>

The deflection unit 59 includes the half mirror 56 and the holder 5. As illustrated in FIG. 6, the half mirror 56 is disposed on a left side of the lens unit 6. The half mirror 56 can reflect image light, which passes through the lens unit 6 and is incident from a right side, to a rear side. A user can confirm a virtual image with the eye on the basis of the image light that is reflected to the rear side by the half mirror 56. In addition, the half mirror 56 can allow external light, which is incident thereto from a front side, to be transmitted therethrough to the rear side.

The half mirror 56 has a rectangular plate shape. For example, the half mirror 56 is configured by depositing a metal such as aluminum and silver on a transparent resin or a glass substrate to have a predetermined reflectivity (for example, 50%). The half mirror 56 is held by the holder 5 to be described later. In both surfaces of the half mirror 56 in a state of being held by the holder 5, one surface 56B faces a diagonally right backward side, and the other surface 56C faces a diagonally left forward side. The half mirror 56 reflects a part (for example, 50%) of light, which is incident to each of the surfaces 56B and 56C, and can allow the other part of the light to be transmitted therethrough.

Furthermore, in the present disclosure, a reflective member, which can totally reflect image light incident to the surface 56B to a rear side, may be used instead of the half mirror 56. In addition, an optical path deflection member such as a prism and a diffraction lattice may be used instead of the half mirror 56.

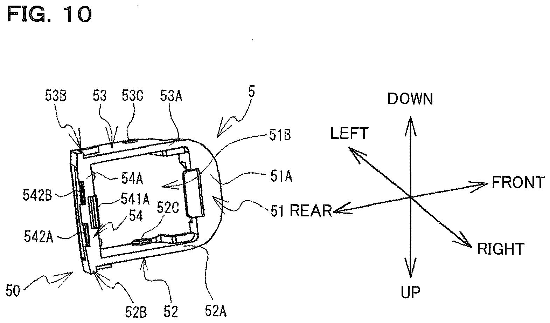

The holder 5 is disposed on a left side of the lens unit 6 to hold the half mirror 56. As illustrated in FIG. 9 and FIG. 10, the holder 5 includes a base member 50. The base member 50 includes a first end portion 51, a second end portion 52, a third end portion 53, and a fourth end portion 54, each having a plate shape. Among three pairs of flat surfaces of the first end portion 51 in which each pair of surfaces are parallel to each other, the pair of flat surfaces having the greatest area faces the right and left direction. An upper-side corner and a lower-side corner of the front end of the first end portion 51 are curved. The second end portion 52 extends from an upper side of a rear end of the first end portion 51 to a backward side. The third end portion 53 extends from a lower side of a rear end of the first end portion 51 to a backward side. Among three pairs of flat surfaces of the second end portion 52 in which each pair of flat surfaces are parallel to each other, the pair of flat surfaces having the greatest area faces the up and down direction. Among three pairs of flat surfaces of the third end portion 53 in which each pair of flat surfaces are parallel to each other, the pair of flat surfaces having the greatest area faces the up and down direction. The fourth end portion 54 is provided between rear ends of the second end portion 52 and the third end portion 53. Among three pairs of flat surfaces of the fourth end portion 54 in which each pair of flat surfaces are parallel to each other, the pair of flat surfaces having the greatest area faces the front and rear direction. A length of the fourth end portion 54 in the right and left direction is shorter than the length of each of the second end portion 52 and the third end portion 53 in the right and left direction. Positions of right end surfaces of the first end portion 51, the second end portion 52, the third end portion 53, and the fourth end portion 54 in the right and left direction are the same as each other, and form the same plane. A hole 51B is formed at a portion that is surrounded by the first end portion 51 to the fourth end portion 54. Hereinafter, as illustrated in FIG. 10, right end surfaces of the first end portion 51, the second end portion 52, the third end portion 53, and the fourth end portion 54 are referred to as first end surface 51A, a second end surface 52A, a third end surface 53A, and a fourth end surface 54A, respectively.

As illustrated in FIG. 9, a hole 52C is provided in the vicinity of a left and front side corner of the second end portion 52 to pass through the corner in the up and down direction. A hole 53C is provided in the vicinity of a left and front side corner of the third end portion 53 to pass through the corner in the up and down direction. As illustrated in FIG. 6, an upper-side protruding part 56A, which protrudes from an upper end of the half mirror 56 to an upward side, is fitted into the hole 52C from a downward side. A lower-side protruding part (not illustrated), which protrudes from a lower end of the half mirror 56 to a downward side, is fitted into the hole 53C from an upward side. The holder 5 supports the upper-side protruding part 56A of the half mirror 56 at the hole 52C, and supports a lower-side protruding part (not illustrated) of the half mirror 56 at the hole 53C, thereby holding the half mirror 56. The half mirror 56 is disposed on a left side of a flat surface including the first end surface 51A to the fourth end surface 54A.

As illustrated in FIG. 9 and FIG. 10, a holder protruding part 52B is provided on an upper surface of a portion, which is connected to the fourth end portion 54, of the second end portion 52. The holder protruding part 52B includes extending parts 521B and 522B. The extending part 521B is a plate-shaped portion that protrudes from the second end surface 52A (refer to FIG. 10) in the left direction. A length of the extending part 521B in the right and left direction is the same as a length between an upper end of the left end 24C (refer to FIG. 4) of the fourth extending part 24A, and a right end of the rear-side first regulation member 221B (refer to FIG. 4) in the right and left direction (hereinafter, also referred to as "length of the groove 221C (refer to FIG. 4) in the right and left direction"). The extending part 522B is a plate-shaped portion that extends from a left end of the extending part 521B to a front side. A holder protruding part 53B is provided on a lower surface of a portion, which is connected to the fourth end portion 54, of the third end portion 53. The holder protruding part 53B includes extending parts 531B and 532B. The extending part 531B is a plate-shaped portion that protrudes from the third end surface 53A to the left direction. A length of the extending part 531B in the right and left direction is the same as a length between a lower end of the left end 24C of the fourth extending part 24A and a right end of the rear-side first regulation member 231B (refer to FIG. 4) in the right and left direction (hereinafter, also referred to as "length of the groove 231C (refer to FIG. 4) in the right and left direction"). The extending part 532B is a plate-shaped portion that extends from a left end of the extending part 531B to the forward side.

As illustrated in FIG. 10, a first holder engagement part 541A and second holder engagement parts 542A and 542B are provided on the fourth end surface 54A of the fourth end portion 54. The first holder engagement part 541A protrudes from a front side in comparison to a center of the fourth end surface 54A in the up and down direction and a center thereof in the front and rear direction to the right direction. The second holder engagement part 542A protrudes from an upper side in comparison to the center of the fourth end surface 54A in the up and down direction and a rear side in comparison to the center thereof in the front and rear direction to the right direction. The second holder engagement part 542B protrudes from a lower side in comparison to the center of the fourth end surface 54A in the up and down direction and a rear side in comparison to the center thereof in the front and rear direction to the right direction.

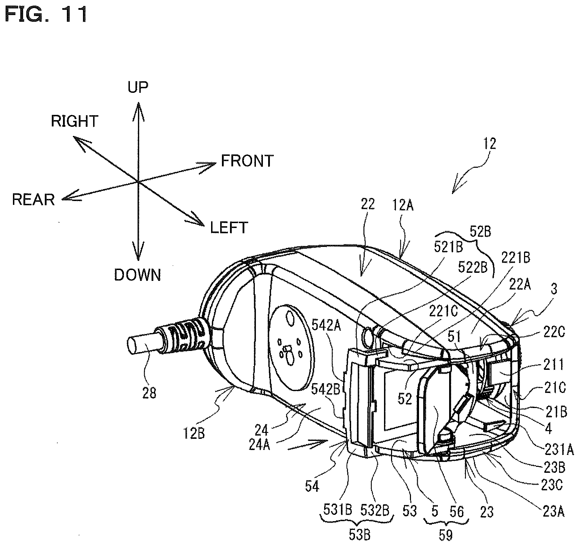

The deflection unit 59 is detachably supported to the casing 12. FIG. 11 illustrates a state before mounting of the deflection unit 59 to the casing 12 is completed. The deflection unit 59 is mounted to the casing 12 when the holder 5 moves from the rear side to the front side with respect to a region covered in the up and down direction with the second extending part 22A of the second casing 22 and the third extending part 23A of the third casing 23. While the deflection unit 59 is mounted to the casing 12, the holder protruding part 52B of the holder 5 enters the groove 221C of the second extending part 22A from the rear side, and the holder protruding part 53B of the holder 5 enters the groove 231C (refer to FIG. 4) of the third extending part 23A from the rear side. The second end portion 52 of the holder 5 moves at a lower side of the second rear surface 22B (refer to FIG. 4) of the second extending part 22A of the casing 12 along the second rear surface 22B in parallel thereto. The third end portion 53 of the holder 5 moves at an upper side of the third rear surface 23B (refer to FIG. 4) of the third extending part 23A of the casing 12 along the third rear surface 23B in parallel thereto.

While the deflection unit 59 is mounted to the casing 12, the first holder engagement part 541A (refer to FIG. 10) comes into contact with the casing engagement part 241 (refer to FIG. 4) provided on the left end 24C of the fourth casing 24 from the rear side. In a case where a force is further applied to the front side with respect to the holder 5, the fourth end portion 54 is bent to the left side, and thus the first holder engagement part 541A moves to the front side of the casing engagement part 241 beyond the left side of the casing engagement part 241.

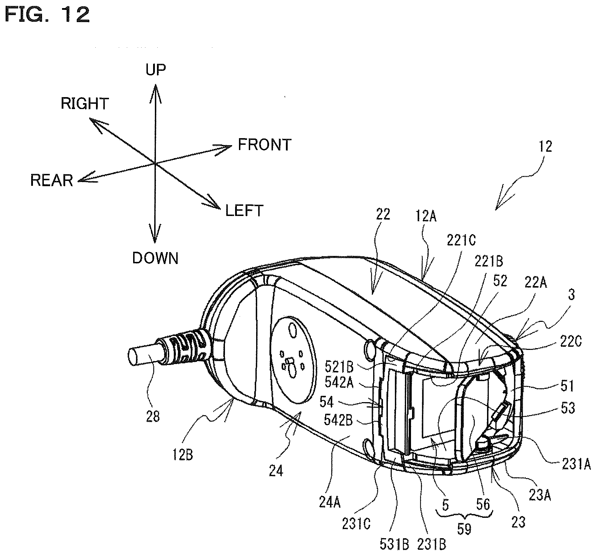

FIG. 12 illustrates a state in which the deflection unit 59 is mounted to the casing 12. A front end of the first end portion 51 of the holder 5 comes into contact with the vicinity of the left end 21C of the first rear surface 21B (refer to FIG. 11) of the first extending part 21A of the first casing 21 from the rear side. According to this, movement of the holder 5 to the front side is regulated. The holder 5 is disposed at a region covered in the up and down direction with the second extending part 22A of the second casing 22, and the third extending part 23A of the third casing 23. The holder 5 holds the half mirror 56 (refer to FIG. 6) on a left side of the first end surface 51A to the fourth end surface 54A (refer to FIG. 10), and thus the half mirror 56 is disposed on a left side in comparison to the first rear surface 21B with which the first end portion 51 comes into contact.

A left lateral surface of the second regulation member 211 (refer to FIG. 11) comes into contact with a position, which includes a center in the up and down direction, of the first end surface 51A (refer to FIG. 10) of the first end portion 51 of the holder 5. The front-side first regulation member 221A (refer to FIG. 5) comes into contact with an upper-side position of the left end surface of the first end portion 51 of the holder 5. A right lateral surface of the front-side first regulation member 231A (refer to FIG. 5) comes into contact with a lower-side position of the left end surface of the first end portion 51 of the holder 5.

Furthermore, a length between the right ends of the front-side first regulation members 221A and 231A and the left end of the second regulation member 211 is the same as the length (thickness) of the first end portion 51 of the holder 5 in the right and left direction. Accordingly, in a state in which the deflection unit 59 is mounted to the casing 12, the right end surfaces of the front-side first regulation members 221A and 231A and the left end surface of the second regulation member 211 regulate movement of the front side of the holder 5 in the right and left direction.

The extending part 521B of the holder protruding part 52B (refer to FIG. 9) is fitted into the groove 221C. A right end of the extending part 521B, that is, a rear end of the second end surface 52A comes into contact with an upper end of the left end 24C of the fourth extending part 24A which constitutes the groove 221C. A left end of the extending part 521B comes into contact with a right end of the rear-side first regulation member 221B. The extending part 531B of the holder protruding part 53B (refer to FIG. 9) is fitted into the groove 231C. A right end of the extending part 531B, that is, a rear end of the third end surface 53A comes into contact with a lower end of the left end 24C of the fourth extending part 24A which constitutes the groove 231C. A left end of the extending part 531B comes into contact with a right end of the rear-side first regulation member 231B.

An upper-side surface of the second end portion 52 (refer to FIG. 9) of the holder 5 is deposed on a lower side in comparison to the second rear surface 22B (refer to FIG. 4) of the second extending part 22A of the casing 12 to face the second rear surface 22B in a state of being spaced away therefrom by the amount of upward protruding part of the holder protruding part 52B with respect to the second end portion 52. A lower-side surface of the third end portion 53 (refer to FIG. 9) of the holder 5 is disposed on an upper side in comparison to the third rear surface 23B (refer to FIG. 4) of the third extending part 23A of the casing 12 to face the third rear surface 23B in a state of being spaced away therefrom by the amount of downward protruding part of the holder protruding part 53B with respect to the third end portion 53.

Furthermore, the length of the extending part 521B in the right and left direction is the same as the length of the groove 221C in the right and left direction. In addition, the length of the extending part 531B in the right and left direction is the same as the length of the groove 231C in the right and left direction. Accordingly, in a state in which the deflection unit 59 is mounted to the casing 12, the right end of the rear-side first regulation member 221B, and the upper end of the left end 24C of the fourth extending part 24A, which constitute the groove 221C, regulate movement of a rear side of the holder 5 in the right and left direction. In addition, in a state in which the deflection unit 59 is mounted to the casing 12, the right end of the rear-side first regulation member 231B and the lower end of the left end 24C of the fourth extending part 24A, which constitute the groove 231C, regulate movement of the holder 5 in the right and left direction.

In a state in which the deflection unit 59 is mounted to the casing 12, a front lateral surface of the casing engagement part 241 (refer to FIG. 4) comes into contact with a rear lateral surface of the first holder engagement part 541A (refer to FIG. 10). A rear lateral surface of the casing engagement part 241 comes into contact with a front lateral surface of each of the second holder engagement parts 542A and 542B. In this manner, the first holder engagement part 541A and the second holder engagement parts 542A and 542B, and the casing engagement part 241 engage with each other. Accordingly, the movement of the holder 5 in the front and rear direction is regulated by the casing engagement part 241, and a state in which the deflection unit 59 is mounted to the casing 12 is maintained.

### <Overview of Operation (Focus Adjustment)>

Description will be given of an overview of an operation of the HMD 1. First, a user wears the mounting member 8 (refer to FIG. 1) of the HMD 1 on the head. The user performs position adjustment so that the half mirror 56 (refer to FIG. 1) is located in front of a left eye by holding the body member 11 (refer to FIG. 1) in a state in which the deflection unit 59 (refer to FIG. 1) is mounted to the casing 12.

Output of image data is initiated from an external device (not illustrated). The control substrate 73B (refer to FIG. 6) receives the image data through the communication line 28 (refer to FIG. 2). The control substrate 73B displays an image in accordance with the received image data on the liquid crystal panel 72B. Image light of the image displayed on the liquid crystal panel 72B is transmitted from the glass substrate 72A and the cylindrical member 71A to a left side, and is emitted to a left side from the image unit 7. The image light, which is emitted from the image unit 7, is transmitted through the plurality of lenses 63 of the lens unit 6 to a left side, and is emitted from the lens unit 6 to a left side. The half mirror 56 reflects the image light, which is emitted from the lens unit 6, to a rear side. The image light is incident to a left eye of the user. In addition, the half mirror 56 allows external light incident from a front side to be transmitted therethrough to a rear side. According to this, the user recognizes a virtual image in a state of overlapping the landscape in front of the body member 11 of the HMD 1.

Description will be given of movement of the lens unit 6 in a case where the user rotates the operation member 3 so as to perform focus adjustment. In a case where the adjustment mechanism 4 rotates in accordance with the rotation of the operation member 3, the convex portion 64 (refer to FIG. 6) moves along the cam groove 42 (refer to FIG. 8). When the lens unit 6 moves in accordance with the movement of the convex portion 64, the groove 242 regulates movement of the convex portion 65 (refer to FIG. 7) with respect to the up and down direction. Accordingly, the lens unit 6 moves in the right and left direction in accordance with the rotation of the adjustment mechanism 4. Furthermore, in the following description on a rotational direction (clockwise direction or a counterclockwise direction), the rotational direction represents a direction when the HMD 1 is seen from a front side unless otherwise stated.

A case where the operation member 3 rotates in the clockwise direction will be described in detail as an example with reference to FIG. 13. In a case where the adjustment mechanism 4 rotates in accordance with the rotation of the operation member 3, a pair of parallel wall surfaces, which forms the cam groove 42 (refer to FIG. 8) and extends in the front and rear direction, applies a force to the convex portion 64, which comes into contact with the wall surfaces, toward a right side, and moves the convex portion 64 to the right side. In accordance with the movement of the convex portion 64, the lens unit 6 moves to a right side. The cylindrical member 62 (refer to FIG. 6) of the lens unit 6 enters the inside of the cylindrical member 71A of the image unit 7. When the convex portion 64 comes into contact with the first end 42A (refer to FIG. 8) of the cam groove 42, the rotation of the operation member 3 in the clockwise direction is regulated. At this time, a right end of the holding member 61 of the lens unit 6 approaches a left end of the cylindrical member 71A of the image unit 7. The liquid crystal panel 72B (refer to FIG. 6) of the image unit 7 and the plurality of lenses 63 (refer to FIG. 6) of the lens unit 6 approach each other.

A case where the operation member 3 rotates in a counterclockwise direction will be described in detail as an example with reference to FIG. 14. In a case where the adjustment mechanism 4 rotates in accordance with the rotation of the operation member 3, a pair of parallel wall surfaces, which forms the cam groove 42 (refer to FIG. 8) and extends in the front and rear direction, applies a force to the convex portion 64, which comes into contact with the wall surfaces, toward a left side, and moves the convex portion 64 to the left side. In accordance with the movement of the convex portion 64, the lens unit 6 moves to the left side. The cylindrical member 62 of the lens unit 6 moves from the inside of the cylindrical member 71A of the image unit 7 to an outer side in a left direction. When the convex portion 64 comes into contact with the second end 42B of the cam groove 42, the rotation of the operation member 3 in the counterclockwise direction is regulated. At this time, the right end of the holding member 61 of the lens unit 6 is spaced away from the left end of the cylindrical member 71A of the image unit 7 to the left side. The liquid crystal panel 72B (refer to FIG. 6) of the image unit 7 and the plurality of lens 63 (refer to FIG. 6) of the lens unit 6 are spaced away from each other.

Furthermore, when the lens unit 6 moves in the right and left direction, a flare angle of image light, which becomes a virtual image to be confirmed with eyes by the user, varies by the plurality of lenses 63. Accordingly, the user can perform focus adjustment by rotating the operation member 3. Furthermore, as illustrated in FIG. 8, the angle φ made between the direction 48 and the direction 49 is 120°, and thus a rotatable angle of the operation member 3 becomes 120°.

When the lens unit 6 moves in the right and left direction in accordance with rotation of the operation member 3 and the adjustment mechanism 4, at least parts of the cylindrical member 62 and the cylindrical member 71A in the right and left direction always overlap each other. Accordingly, even when the lens unit 6 moves in the right and left direction, image light, which is generated by the image unit 7, is not leaked from the image unit 7 and the lens unit 6 to an outer side.

While the adjustment mechanism 4 rotates, a state in which the leaf spring 40 (refer to FIG. 6) engages with one of the plurality of concave portions 41 is changed to a state in which the leaf spring 40 (refer to FIG. 6) engages with another adjacent one of the plurality of concave portions 41. The rotation of the adjustment mechanism 4 is controlled in a state in which the leaf spring 40 engages with the concave portion 41, and thus the position of the adjustment mechanism 4 becomes stable. Accordingly, the user can easily maintain the operation member 3 and the adjustment mechanism 4 to a desired position, and thus the user can easily perform focus adjustment.

### <Effect>

The user wears the mounting member 8, and disposes the half mirror 56 in front of a left eye (a right eye from a front side). The holder 5 is held by the casing 12 in a state in which the first end portion 51 comes into contact with the first rear surface 21B of the first extending part 21A of the casing 12. Accordingly, movement of the holder 5 to a front side of the user is regulated. In addition, the front-side first regulation members 221A and 231A, the rear-side first regulation members 221B and 231B, and the second regulation member 211 regulate movement of the holder 5 in the right and left direction. In this case, even when the holder 5 is detached from the casing 12 while the user who wears the HMD 1 performs an operation, the holder 5 does not intrude into an operation region on a front side the user, and moves to a user side. Accordingly, in the HMD 1, even when the holder 5 is detached from the casing 12, it is possible to prevent the operation of the user from being obstructed.

The casing engagement part 241 engages with the first holder engagement part 541A and the second holder engagement parts 542A and 542B. In this state, the holder 5 is held by the casing 12, and therefore the HMD 1 can maintain a state in which the holder 5 is mounted to the casing 12. Accordingly, in the HMD 1, it is possible to prevent the holder 5 in a state of being mounted to the casing 12 from being detached from the casing 12. In addition, the casing engagement part 241 is provided at a position including the center of the left end 24C of the fourth extending part 24A in the up and down direction. Accordingly, in the HMD 1, it is possible to maintain the holder 5 at the central position in the up and down direction. In this case, it is possible to effectively prevent the holder 5 from being detached from the casing 12.

The front-side first regulation member 221A and the rear-side first regulation member 221B are provided on the second rear surface 22B. The front-side first regulation member 231A and the rear-side first regulation member 231B are provided on the third rear surface 23B. The front-side first regulation members 221A and 231A, and the rear-side first regulation members 221B and 231B respectively come into contact with the holder 5 from a left side, and can regulate movement of the holder 5 to the left side. In addition, in this case, the movement of the holder 5 in the right and left direction is regulated at both a front side and a rear side. According to this, in a state in which the user wears the HMD 1, movement of the holder 5 to the left side is appropriately regulated. Accordingly, in a case where the holder 5 is detached from the casing 12 during an operation of a user, it is possible to appropriately prevent the holder 5 from invading into an operation region on a left side (a right side on a user side).

The second regulation member 211 is provided on the first rear surface 21B. The second regulation member 211 comes into contact with the first end surface 51A of the first end portion 51 of the holder 5, and can regulate movement of the holder 5 to a right side. In addition, the second regulation member 211 is provided at a position including the center of the first rear surface 21B in the up and down direction. In this case, movement of the holder 5 to the right side is regulated on a front side and at the center in the up and down direction. Accordingly, the second regulation member 211 can more appropriately regulate movement of the holder 5 to the right side. Accordingly, even in a case where the holder 5 is detached from the casing 12 during an operation of a user who wears the HMD 1, it is possible to appropriately prevent the holder 5 from invading into an operation region on a right side (a left side on a user side).

The second regulation member 211 is provided in the vicinity of the left end 21C of the first rear surface 21B, and the holder 5 is held at this portion. Accordingly, external light incident to the HMD 1 from a front side is not shielded by the first extending part 21A of the first casing 21, and is incident to the half mirror 56 that is held by the holder 5. In this manner, in the HMD 1, in a case where the external light is transmitted through the half mirror 56 from a front side to a rear side, it is possible to prevent the external light from being shielded by the first casing 21.

The holder 5 includes the base member 50. The base member 50 includes the first end portion 51 to the fourth end portion 54. The second end portion 52 includes the holder protruding part 52B, and the third end portion 53 includes the holder protruding part 53B. The holder protruding part 52B is fitted into the groove 221C, and the holder protruding part 53B is fitted into the groove 231C. The grooves 221C and 231C can regulate movement of the holder 5 in the right and left direction. Accordingly, in the HMD 1, it is possible to appropriately fix the holder 5 to the casing 12.

The fourth end portion 54 includes the first holder engagement part 541A and the second holder engagement parts 542A and 542B. In a state in which the holder 5 is detached from the casing 12, the casing engagement part 241 is removed from the first holder engagement part 541A, and the second holder engagement parts 542A and 542B. On the other hand, in a state in which the holder 5 is mounted to the casing 12, the casing engagement part 241 engages with the first holder engagement part 541A, and the second holder engagement parts 542A and 542B, and regulates movement of the holder 5 in the front and rear direction. In this manner, in the HMD 1, it is possible to fix the holder 5 to the casing 12 in a detachable manner.

The mounting member 8 of the HMD 1 includes the first portion 8A that extends in the right and left direction, and is forwardly curved in a convex shape, and the second portions 8B and 8C which extend from both sides of the first portion 8A to a rear side. In addition, the HMD 1 includes the connecting member 9 that extends from the first portion 8A of the mounting member 8. The body member 11 is connected to an end of the connecting member 9. Accordingly, in a state in which a user wears the mounting member 8 on the head, it is possible to maintain the half mirror 56 in front of eyes of the user. Accordingly, the user can perform an operation using both hands while confirming image light deflected by the half mirror 56 with the eye.

### <Modification Example>

Furthermore, various modifications can be made in the present disclosure without limitation to the embodiment. The casing 12 may cover only a part of the image unit 7. Any one of the front-side first regulation member 221A and 231, and the rear-side first regulation members 221B and 231B may be provided. Only one of the front-side first regulation members 221A and 231A may be provided. Only one of the rear-side first regulation members 221B and 231B may be provided. A regulation member may be provided on a right side of each of the front-side first regulation members 221A and 231A. The first end portion 51 of the holder 5 may be interposed between the front-side first regulation members 221A and 231A and the regulation members which are provided on the right side thereof at both a right side and a left side, respectively. A regulation member may be provided on a right side of each of the rear-side first regulation members 221B and 231B. The holder protruding parts 52B and 53B of the holder 5 may be interposed between the rear-side first regulation members 221B and 231B and the regulation members which are provided on the right side thereof at both a right side and a left side, respectively. A regulation member may be provided on a left side of the second regulation member 221. The first end portion 51 of the holder 5 may be interposed between the second regulation member 211 and the regulation member on the right side at both a right side and a left side.

The casing engagement part 241 may be provided over the entire region of the left end 24C of the fourth extending part 24A in the up and down direction. In addition, the casing engagement part 241 may not be provided. For example, the first holder engagement part 541A, and the second holder engagement parts 542A and 542B may directly engage with the left end 24C of the fourth extending part 24A.

The first holder engagement part 541A may be provided at two sites, that is, on a front side of the second holder engagement parts 542A and 542B. The second holder engagement parts 542A and 542B may be integrally formed. The first holder engagement part 541A may not be provided. A groove into which the casing engagement part 241 is fitted may be provided instead of the first holder engagement part 541A, and the second holder engagement parts 542A and 542B.

The shape of the base member 50 of the holder 5 is not limited to the embodiment. A transparent plate (for example, glass) may be provided in the hole 51B at a portion surrounded by the first end portion 51 to the fourth end portion 54. For example, the half mirror 56 may be directly fixed to an end of the transparent plate. In this case, the first end portion 51 to the fourth end portion 54 may not be provided. Furthermore, in this case, an upper-side end of the transparent plate may be fitted into the groove 221C, and a lower-side end of the transparent plate may be fitted into the groove 231C.

In the left end 21C of the first casing 21, both ends in the up and down direction are recessed in a right direction toward the center in the up and down direction. Here, a transparent member may be provided in the recessed portion. In this case, positions of the left end 22C of the second extending part 22A and the left end 23C of the third extending part 23A in the right and left direction, and a position of a left end of the transparent member in the right and left direction may be the same as each other.

The HMD 1 may have a configuration in which the mounting member 8 and the connecting member 9 are not provided, and only the body member 11 is provided. The body member 11 may be directly fixed to an eyeglass and the like. In addition, the HMD 1 may have a configuration in which the mounting member 8 is not provided, and only the connecting member 9 and the body member 11 are provided.

The right and left direction of the HMD 1 is an example of "first direction" in the present disclosure. The left side of the HMD 1 is an example of "one side of a first direction" in the present disclosure, and the right side is an example of "the other side of the first direction" in the present disclosure. The front and rear direction of the HMD 1 is an example of "second direction" in the present disclosure. The front side of the HMD is an example of "one side of the second direction" of the present disclosure, and the rear side is an example of "the other side of the second direction" in the present disclosure. The up and down direction of the HMD 1 is an example of "third direction" in the present disclosure. The upper side of the HMD is an example of "one side of a third direction" in the present disclosure, and the lower side is an example of "the other side of the third direction" in the present disclosure. The half mirror 56 is an example of "deflection member" in the present disclosure. The lens unit 6 and the image unit 7 are examples of "image light unit" in the present disclosure. The first rear surface 21B is an example of "first surface" in the present disclosure. The second rear surface 22B is an example of "second surface" in the present disclosure. The third rear surface 23B is an example of "third surface" in the present disclosure.

### [Description of Reference Numerals]

- 1: HMD
- 5: Holder
- 6: Lens unit
- 7: Image unit
- 8: Mounting member
- 8A: First portion
- 8B: Second portion
- 8C: Second portion
- 9: Connecting member
- 12: Casing
- 21A: First extending part
- 21B: First rear surface
- 21C: Left end
- 22A: Second extending part
- 22B: Second rear surface
- 22C: Left end
- 23A: Third extending part
- 23B: Third rear surface
- 23C: Left end
- 24A: Fourth extending part
- 24C: Left end
- 50: Base member
- 51: First end portion
- 51A: First end surface
- 52: Second end portion
- 52A: Second end surface
- 52B: Holder protruding part
- 53: Third end portion
- 53A: Third end surface
- 53B: Holder protruding part
- 54: Fourth end portion
- 54A: Fourth end surface
- 56: Half mirror
- 221A: Front-side first regulation member
- 221B: Rear-side first regulation member
- 231A: Front-side first regulation member
- 231B: Rear-side first regulation member
- 241: Casing engagement part
- 541A: First holder engagement part
- 542A: Second holder engagement part
- 542B: Second holder engagement part

## Claims

1. An image display device, comprising:
an image light unit that generates image light and is capable of emitting the image light to one side of a first direction;
a deflection member that deflects the image light that is emitted from the image light unit;
a holder that holds the deflection member; and
a casing that covers at least a part of the image light unit and detachably supports the holder,
wherein the casing includes three extending parts which extend between an end of the image light unit on the one side of the first direction, and an end of the casing on the one side of the first direction, the three extending parts including:
a first extending part that is formed on one side of a second direction perpendicular to the first direction, and includes a first surface that faces the other side of the second direction;
a second extending part that is formed on one side of a third direction perpendicular to both of the first direction and the second direction, and includes a second surface that faces the other side of the third direction; and
a third extending part that is formed on the other side of the third direction, faces the one side of the third direction, and includes a third surface that faces the second surface,
a portion of the first extending part on the one side of the third direction is connected to a portion of the second extending part on the one side of the second direction, and a portion of the first extending part on the other side of the third direction is connected to a portion of the third extending part on the one side of the second direction,
at least the first surface comes into contact with the holder in a state of being mounted to the casing,
a regulation member, which regulates movement of the holder in the first direction, is provided on at least one of the first surface, the second surface, and the third surface, and
the deflection member deflects the image light to the other side of the second direction in a state in which the holder is mounted to the casing.

2. The image display device according to claim 1,
wherein the regulation member includes at least one of a first regulation member that is a member protruding from at least one of the second surface and the third surface, and comes into contact with a portion of the holder, which is in a state of being mounted to the casing, on the one side of the first direction.

3. The image display device according to claim 1 or 2,
wherein the regulation member includes a second regulation member that is a member protruding from the first surface, and comes into contact with a portion of the holder, which is in a state of being mounted to the casing, on the other side of the first direction, and an end of the holder on the one side of the second direction.

4. The image display device according to claim 3,
wherein the second regulation member is provided on the first surface at a position including a center in the third direction.

5. The image display device according to claim 3 or 4,
wherein the second regulation member is provided on the first surface at an end on the one side of the first direction.

6. The image display device according to claim 2,
wherein at least one of the first regulation member includes:
an one-side first regulation member that is provided on the second surface on the one side of the second direction, and on the third surface on the one side of the second direction; and
an another-side first regulation member that is provided on the second surface on the other side of the second direction, and on the third surface on the other side of the second direction.

7. The image display device according to any one of claims 1 to 6, further comprising a casing engagement part that is capable of engaging with the holder.

8. The image display device according to claim 7,
wherein the casing further includes a fourth extending part that extends between a portion of the image light unit on the one side of the first direction and an end of the casing on the one side of the first direction, and is formed on an end on the other side of the second direction, and
the casing engagement part is provided at a position, which includes a center in the third direction, of the fourth extending part.

9. The image display device according to claim 6,
wherein the holder includes a base member including a first end portion, a second end portion, a third end portion, and a fourth end portion,
the base member includes:
a first holder protruding part that protrudes from a connection portion between the second end portion and the fourth end portion, and comes into contact with the another-side first regulation member that is provided on the second surface in a state in which the holder is mounted to the casing; and
a second holder protruding part that protrudes from a connection portion between the third end portion and the fourth end portion, and comes into contact with the another-side first regulation member that is provided on the third surface in a state in which the holder is mounted to the casing, and
the first end portion comes into contact with the first surface in a state in which the holder is mounted to the casing.

10. The image display device according to claim 7 or 8,
wherein the holder includes a base member including a first end portion, a second end portion, a third end portion, and a fourth end portion,
the base member includes a holder engagement part that protrudes from the fourth end portion, and engages with the casing engagement part in a state in which the holder is mounted to the casing, and
the first end portion comes into contact with the first surface in a state in which the holder is mounted to the casing.

11. The image display device according to any one of claims 1 to 10,
wherein the first extending part, the second extending part, and the third extending part are formed integrally with the casing.

12. The image display device according to any one of claims 1 to 11,
wherein the deflection member deflects the image light in parallel to the second direction toward the other side of the second direction in a state in which the holder is mounted to the casing.

13. The image display device according to any one of claims 1 to 12, further comprising:
a mounting member which includes a first portion extending in the first direction and being curved in a convex shape toward the one side of the second direction, and a pair of second portions extending from both sides of the first portion to the other side of the second direction; and
a connecting member which extends from the first portion of the mounting member, and of which an end is connected to the casing.

14. A deflection unit, comprising:
a deflection member that deflects image light in a case where the image light generated by an image light unit is emitted to one side of a first direction; and
a holder that is detachably supported to a casing covering at least a part of the image light unit, and holds the deflection member,
wherein the casing includes three extending parts which extend between an end of the image light unit on the one side of the first direction, and an end of the casing on the one side of the first direction, the three extending parts including a first extending part that is formed at an end on one side of a second direction perpendicular to the first direction, and includes a first surface that faces the other side of the second direction, a second extending part that is formed at an end on one side of a third direction perpendicular to both of the first direction and the second direction, and includes a second surface that faces the other side of the third direction, and a third extending part that is formed at an end on the other side of the third direction, and includes a third surface that faces the one side of the third direction, and at least the first surface including an engagement element that comes into contact with the holder in a state of being mounted to the casing and is capable of engaging with the holder,
the deflection member deflects the image light to the other side of the second direction in a state in which the holder is mounted to the casing,
the holder includes a base member including a first end portion which comes into contact with the first surface, a second end portion, a third end portion, and a fourth end portion, and
the base member includes a protruding portion protruding from any one of the first end portion, the second end portion, the third end portion, and the fourth end portion, and engaging with the engagement element in a state in which the holder is mounted to the casing.

15. The deflection unit according to claim 14,
wherein the engagement element includes a regulation member that is provided on at least one of the first surface, the second surface, and the third surface of the casing, and regulates movement of the holder in the first direction,
the regulation member includes:
an one-side first regulation member that is provided on the second surface on the one side of the second direction, and on the third surface on the one side of the second direction; and
an another-side first regulation member that is provided on the second surface on the other side of the second direction, and on the third surface on the other side of the second direction, and
the protruding portion includes:
a first holder protruding part that protrudes from a connection portion between the second end portion and the fourth end portion, and comes into contact with the another-side first regulation member that is provided on the second surface in a state in which the holder is mounted to the casing; and
a second holder protruding part that protrudes from a connection portion between the third end portion and the fourth end portion, and comes into contact with the another-side first regulation member that is provided on the third surface in a state in which the holder is mounted to the casing.

16. The deflection unit according to claim 14 or 15,
wherein the casing further includes a fourth extending part that extends between a portion of the image light unit on the one side of the first direction, and an end of the casing on the one side of the first direction, and is formed on an end on the other side of the second direction,
the engagement element includes a casing engagement part that is formed in the fourth extending part and is capable of engaging with the holder, and
the protruding portion includes a holder engagement part that protrudes from the fourth end portion and engages with the casing engagement part in a state in which the holder is mounted to the casing.

17. An image display device, comprising:
an image light unit that generates image light, and is capable of emitting the image light to one side of a first direction;
a deflection member that deflects the image light, which is emitted from the image light unit, to the other side of a second direction that is perpendicular to the first direction;
a holder that holds the deflection member;
a casing that covers at least a part of the image light unit, and is detachably supports the holder; and
a regulation member that is provided in the casing, engages with the holder, regulates movement of the holder in the first direction, and permits movement along the second direction, and
in a state in which the holder is mounted to the casing, one end of the holder on one side of the second direction comes into contact with an inner surface of the casing.
